(19) Europäisches Patentamt
European Patent Office
Office européen des brevets

(11) **EP 4 389 282 A1**

(12) **EUROPEAN PATENT APPLICATION**

(43) Date of publication:
**26.06.2024 Bulletin 2024/26**

(21) Application number: **23219565.1**

(22) Date of filing: **21.12.2023**

(51) International Patent Classification (IPC):
**B01L 3/00** *(2006.01)* **B01D 61/42** *(2006.01)*
**G01N 27/26** *(2006.01)*

(52) Cooperative Patent Classification (CPC):
**B01L 3/502715; B01L 3/5025; B01L 3/50273;**
**B01L 3/502761; B01L 3/5085; G01N 15/00;**
**G01N 27/447;** B01D 63/087; B01D 63/088;
B01L 2200/0668; B01L 2300/0645;
B01L 2300/0858; B01L 2300/0893;
B01L 2300/0896; B01L 2400/0418; (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **23.12.2022 EP 22216627**

(71) Applicant: **Imec VZW**
**3001 Leuven (BE)**

(72) Inventors:
• WILLEMS, Kherim
  3051 Sint-Joris-Weert (BE)
• SET, Ying Ting
  3001 Heverlee (BE)
• FATEMI, Naghmeh
  3051 Oud-Heverlee (BE)

(74) Representative: **Winger**
**Mouterij 16 bus 101**
**3190 Boortmeerbeek (BE)**

(54) **CAPTURING ANALYTE PARTICLES IN A LIQUID**

(57) In a first aspect, the present invention relates to a system (10) for capturing an analyte particle (20) from a liquid, comprising: (i) a reservoir (31) for holding the liquid; and (ii) one or more capture devices (40), each comprising: a well (50) having a top (53) opening up to the reservoir (31), a bottom (51), and a depth extending from the top (53) to the bottom (51), and a first set of electrodes (43) at least 50% of the well (50)'s depth below the top opening (53), preferably at least 65%, more preferably at least 75%, for generating an electric field.

**FIG 1**

(52) Cooperative Patent Classification (CPC): (Cont.)
B01L 2400/0421; B01L 2400/0424

## Description

### Technical field of the invention

The present invention relates to manipulating analyte particles in a liquid and in particular to systems and methods for capturing said analyte particles from the liquid.

### Background of the invention

In the life sciences industry, the ability to sample, characterize, and quantify the contents of a mixture-such as a particular (set of) molecule(s) (*e.g.*, proteins or biomarkers) from a complex mixture (*e.g.,* urine, blood or a bioreactor sample)-is essential for a variety of applications. These applications can for instance range from the quantification of biomarkers in blood, over determining the number of aggregates in a protein solution, to validating the purity of a viral vector production in gene therapy.

While this ability to select, identify, and quantify analyte particles in a (complex) mixture is thus key, there is currently no technology that is capable of performing the selection part of this problem in a (somewhat) universal manner-*i.e.*, compatible with a (broad) range of (bio)particles having varying sizes, shapes and charges. Traditional analytics such as gel electrophoresis, chromatography, ELISA (enzyme-linked immunosorbent assay), and PCR (polymerase chain reaction) are commonly used for this purpose, but they are labour intensive and generally require extensive tailoring for each experiment. Moreover, these assays are typically not suited to deal with unexpected sample components or contaminants; which often remain undetected or may even cause the assay to fail.

Advanced devices for size profiling are found in the nanopore-based 'Oxford Nanopore MinION' (see for example LU, Hengyun; GIORDANO, Francesca; NING, Zemin. Oxford Nanopore MinION sequencing and genome assembly. Genomics, proteomics & bioinformatics, 2016, 14.5: 265-279.) and the nano-constriction-based 'Spectradyne nCSI' (see e.g., CLELAND, Andrew N., et al. Nanopore Characterization. Drug Development & Delivery, 2016, Vol. 16 No. 3, p. 20-26.). However, while they can do more sophisticated size-profiling, they are prone to clogging and do not allow (size-tunable) capturing and/or sorting of analyte particles.

There is thus still a need in the art for solutions which address at least some of the concerns outlined above.

### Summary of the invention

It is an object of the present invention to provide good systems for capturing analyte particles from a liquid. It is a further object of the present invention to provide good methods associated therewith. This objective is accomplished by systems and methods according to the present invention.

It is an advantage of embodiments of the present invention that a capture device can be tuned (*e.g.*, through its manufacture and/or its operation) to a particular species of analyte particles. It is a further advantage of embodiments of the present invention that an analyte particle can be captured selectively with respect to a further analyte or a contaminant.

It is an advantage of embodiments of the present invention that virtually any species of analyte particles can be targeted for capture.

It is an advantage of embodiments of the present invention that a system may be manufactured in a more or less universal way (*e.g.*, not purpose-build for a specific application), but can be configured towards a particular application through the manner in which it is operated. It is a further advantage of embodiments of the present invention that a system used for one application can be relatively easily reconfigured towards another application.

It is an advantage of embodiments of the present invention that the forces (*e.g.*, electric and/or hydrodynamic forces) acting on the analyte particle can be modulated.

It is an advantage of embodiments of the present invention that complex (*e.g.*, multipole) electric fields can be generated, thereby allowing to induce effects such as electrorotation. It is a further advantage of embodiments of the present invention that still further forces and/or effects-such as electrophoretic and electro-osmotic forces-may be leveraged.

It is an advantage of embodiments of the present invention that capture devices can be highly parallelized/multiplexed within a single system. It is a further advantage of embodiments of the present invention that the system can comprise a plurality of capture devices tuned towards different analyte particles, allowing for the efficient capturing of various types of analyte particles in a single system.

It is an advantage of embodiments of the present invention that analyte particles can be captured from complex mixtures, such as a urine, blood or a bioreactor samples.

It is an advantage of embodiments of the present invention that captured analyte particles can be detected, analysed and/or separated from the liquid.

It is an advantage of embodiments of the present invention that the electrodes of the capture device can be protected from chemical (*e.g.*, corrosion) and physical (*e.g.*, delamination) damage.

It is an advantage of embodiments of the present invention that the system can be fabricated in a relatively easy and economical manner. It is a further advantage of embodiments of the present invention that they can be implemented with standard technologies which are commonly used in the field.

It is an advantage of embodiments of the present invention that the solutions can be used in various application areas, for many of which a reliable, non-destructive method to characterize certain analytes of interest is currently lacking.

It is an advantage of embodiments of the present invention that the system could be integrated with other systems, thereby providing a flexible and versatile platform for multiple kinds of analysing applications.

In order to meet the above objective, the systems and methods in accordance with the present invention generally make use of an interplay between the interplay of (tuneable) attractive and repulsive forces to (selectively) target and capture an analyte particle of interest.

In a first aspect, the present invention relates to a system for capturing an analyte particle from a liquid, comprising: (i) a reservoir for holding the liquid; and (ii) one or more capture devices, each comprising: a well having a top opening up to the reservoir, a bottom, and a depth extending from the top to the bottom, and a first set of electrodes at least 50% of the well's depth below the top opening, preferably at least 65%, more preferably at least 75%, for generating an electric field.

In a second aspect, the present invention relates to a method for capturing an analyte particle from a liquid, the method comprising: (a) providing a system in accordance with any embodiment of the first aspect with the liquid in the reservoir, (b) operating at least the first set of electrodes of at least one of the capture devices so as to generate a non-uniform electric field such that there is an attractive dielectrophoretic force acting on the analyte particle.

In a third aspect, the present invention relates to a use of a system in accordance with any embodiment of the first aspect for capturing an analyte particle from a liquid.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

FIG 1 schematically depicts a capture device in a system in accordance with an exemplary embodiment of the present invention.
FIG 2 schematically depicts a further capture device comprising a through-hole in accordance with another exemplary embodiment of the present invention.
FIG 3 schematically depicts the experimental use of a system in accordance with the present invention implemented on a chip, *e.g.*, to analyse the size of liposomes present in a solution.
FIG 4 schematically depicts an illustrative data processing for a system as shown in FIG 3.
FIG 5 schematically depicts a system in accordance with the present invention implemented into a sensor probe, *e.g.*, of analysing a particle distribution within the fluid of a (bio)reactor.
FIG 6 schematically depicts an illustrative data processing for a system as shown in FIG 5.

In the different figures, the same reference signs refer to the same or analogous elements.

**Description of illustrative embodiments**

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, on, under and the like in the description and the claims are used for descriptive purposes and not necessarily for describing relative positions. It is to be understood that the terms so used are interchangeable with their antonyms under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. Thus, the scope of the expression "a device comprising means A and B" should not be interpreted as being limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

The following terms are provided solely to aid in the understanding of the invention.

As used herein, and unless otherwise specified, a set of electrodes "being ... of the well's depth below/above the top opening" may refer to the location of the top, bottom or the centre of mass of the said set of electrodes below/above said level.

In a first aspect, the present invention relates to a system for capturing an analyte particle from a liquid, comprising: (i) a reservoir for holding the liquid; and (ii) one or more capture devices, each comprising: a well having a top opening up to the reservoir, a bottom, and a depth extending from the top to the bottom, and a first set of electrodes at least 50% of the well's depth below the top opening, preferably at least 65%, more preferably at least 75%, for generating an electric field.

Generally, the liquid may be a liquid comprising the analyte particle. In embodiments, the liquid (e.g., water) may further comprise an agent for buffering a pH of the liquid. The liquid may for example be or comprise a sample of a complex mixture, such as urine, blood or a bioreactor sample. The sample may have varying degrees of complexity; such as a growth medium, a lysed growth medium or a centrifuged sample.

In embodiments, the liquid may further comprise ionic species (e.g., at least one, but typically more). In embodiments, the liquid may have an ionic strength of from $1 \times 10^{-6}$ to 10 M. In general, the analyte particle may-but does not need to be-ionic itself. It will be understood though that the ionic species further comprised in the liquid are generally distinct from the analyte particle (i.e., different from the analyte species). In embodiments, the ionic species may comprise one or more selected from: an alkali metal cation (e.g., $Na^+$ or $K^+$), an alkaline earth cation (e.g., $Mg^{2+}$ or $Ca^{2+}$), a polyatomic cation (e.g., $NH_4^+$), a halogen ion (e.g., $Cl^-$ or $Br^-$) or a polyatomic anion (e.g., $OH^-$, $SO_4^{2-}$, $PO_4^{3-}$, etc.). In embodiments, the ionic species may derive from a salt; such as NaCl, KCl, $CaCl_2$. etc.

In embodiments, the analyte particle may have a size (e.g., a Stokes or hydrodynamic radius) in the range of 0.5 nm to 5 $\mu$m, preferably 1 nm to 1 $\mu$m. In embodiments, the analyte particle may be a polarizable analyte particle. Polarizable analyte particles can advantageously experience a dielectrophoretic force in a non-uniform electric field.

The well is typically not limited by its shape. Notwithstanding, the well may for example be shaped as a cube, a rectangular cuboid, a (truncated) pyramid, a cylinder, a (truncated) cone, etc. Accordingly, the top opening may be square, rectangular, round, oval, etc.

The top opening typically has two perpendicular dimensions, the shortest of which may be referred to as its 'width' and the longest as its 'length' (or both as the 'diameter' in case of a round top opening). In embodiments, the top opening may have a width of from 5 nm to 10 $\mu$m, preferably from 10 nm to 5 $\mu$m, more preferably from 20 nm to 2 $\mu$m, still more preferably from 50 nm to 1 $\mu$m, most preferably from 100 nm to 500 nm. In embodiments, the top opening may have an aspect ratio (*i.e.*, width:length) of from 1:1 to 1:5000, preferably from 1:1 to 1:1000, still more preferably from 1:1 to 1:500, such as 1:1 to 1:200, 1:1 to 1:100, 1:1 to 1:50 or 1:1 to 1:20. The top opening may often be perpendicular to the well's depth (*i.e.*, the top opening's width and length may be perpendicular to the well's depth); but in general this is not necessary and the top opening may make a minimal angle with the well's depth of at least 30°, preferably at least 45°, more preferably at least 60°, still more preferably at least 75°, most preferably at least 80°, such as 85° or 90° (*i.e.*, perpendicular).

In embodiments, the well's depth may be from 5 nm to 10 $\mu$m, preferably from 10 nm to 5 $\mu$m, more preferably from 20 nm to 2 $\mu$m, still more preferably from 50 nm to 1 $\mu$m, most preferably from 100 nm to 500 nm. In embodiments, the aspect ratio of the well's depth to the top opening's width may be from 10:1 to 1:10, preferably from 5:1 to 1:5, more preferably from 2.5:1 to 1:2.5, still more preferably from 1.5:1 to 1:1.5, most preferably 1:1. In embodiments, the well may have a footprint (*e.g.*, the area of the orthogonal projection of the well onto the substrate wherein the well is defined) of from 4 nm$^2$ to 1000 $\mu$m$^2$, preferably from 25 nm$^2$ to 250 $\mu$m$^2$, more preferably from 100 nm$^2$ to 40 $\mu$m$^2$, most preferably from 0.01 $\mu$m$^2$ to 10 $\mu$m$^2$.

The well may typically be defined between a bottom, one or more sidewalls and a top. In some embodiments, one or more of the electrodes-or a covering layer thereover (cf. infra)-may further define the well. The top is typically open and coplanar with the sidewalls. In embodiments, the well may be at least partially delineated by a surface comprising a dielectric material (*e.g.*, $SiO_2$, $SiN_x$ or $HfO_2$). In embodiments, at least the sidewalls may typically comprise the dielectric material. For example, the well may be formed in a dielectric layer. The dielectric material may advantageously provide insulation between the electrodes. Moreover, it may typically advantageously offer a good surface (*e.g.*, a good isoelectric point) for forming a suitable electric double layer thereon as such, or which lends itself well for surface engineering to that effect. In embodiments, a surface of the well may be modified so as to control an electric double layer formed thereon. For example, the surface may be modified by a surface treatment (*e.g.*, a plasma treatment) and/or a coating.

In some embodiments, the bottom may be at least partially open. In embodiments, the bottom may open down to a further reservoir (*e.g.*, galvanically separated from the first reservoir). Thus, the well may be (akin to) a nanopore between the first/top and second/bottom reservoir. In such embodiments, the system may further comprise an electrode in the top reservoir and an electrode in the bottom reservoir. Applying an electric potential between these electrodes can then advantageously allow to give rise to further effects/forces which can act upon the analyte particles, such as electrophoretic (*e.g.*, related to $F = qE$) and/or electro-osmotic (*e.g.*, related to $F = 6\pi\varepsilon r$) forces. Moreover, it can advantageously offer other analyte particle detection approaches (cf. infra), *e.g.,* via resistive pulse sensing.

In embodiments, the first set of electrodes may be at least 80% or 90% of the well's depth below the top opening. Note that the first set of electrodes may extend-and even be-below the well's bottom. Accordingly, the first set of electrodes may in embodiments be at most 150% of the well's depth below the top opening, preferably at most 135%, more preferably at most 125%, still more preferably at most 120%, such as at most 110%.

In embodiments, the electric field may be a non-uniform (*e.g.*, spatially inhomogeneous) electric field. A non-uniform electric field gives rise to dielectrophoresis, which can advantageously be used to exert a force onto (*e.g.*, attract) a polarizable analyte particle (cf. infra). The (non-uniform) electric field generated by the first set of electrodes-particularly when used without the second set of electrodes (cf. infra)-may preferably extend in and beyond the well, such that it can exert a non-negligible (dielectrophoretic) force onto an analyte particle outside the well.

In embodiments, the capture device may further comprise a second set of electrodes at most 50% of the well's depth below the top opening, preferably at most 35%, more preferably at most 25%. Akin to the first set of electrodes, the second set of electrodes may extend-and even be-above the top opening. Accordingly, the second set of electrodes may in embodiments be at most 50% of the well's depth above the top opening, preferably at most 35%, more preferably at most 25%, still more preferably at most 20%, such as at most 10%. The second set of electrodes may be for generating a further electric field. Together with the first set of electrodes, this can typically be used to form a more complex (*e.g.*, multipole) combined electric field. Not only does such a combined electric field typically have a larger reach (*i.e.*, extending the deeper into the liquid, but it can also induce other effects (*e.g.*, electrorotation). Accordingly, use of a second set of electrodes advantageously allows on the one hand to affect analytes further out from the well; and on the other hand to produce further effects which can be used (cf. infra) for differential capturing and/or for diversified signal detection.

In embodiments, the first and/or second set of electrodes will typically comprise at least two electrodes; such as consisting of two, three, four or even more electrodes. In embodiments, the electrodes may independently be made of a conductive material (*e.g.*, Pt, Ru or TiN). In embodiments, one or more of the electrodes may be provided on an adhesion layer (*e.g.*, Ti, TiN, Cr or TaN). Such an adhesion layer can advantageously prevent delamination of the electrode. Additionally or alternatively, a covering layer (*e.g.*, $SiO_2$, $SiN_x$ or $HfO_2$) may be provided over one or more of the electrodes. Since typically only capacitive currents are used/needed in the operation of the capture device (cf. infra), at least some of the electrodes can advantageously be insulated by a covering layer to prevent Faradaic currents (*e.g.,* arising due to electrochemical reactions). Moreover, this can also protect the electrode material from direct contact with the liquid, which might damage certain electrode materials (*e.g.*, corrosion of Al in an electrolyte); particularly when a high potential is involved (*e.g.*, electrochemical corrosion of Ru due to oxidation above a certain voltage). Notwithstanding, such a covering layer may typically be relatively thin (*e.g.*, in the order few nm to a few tens of nm, such as 2-20 nm).

It will be readily appreciated that several factors will influence the generated electric field and the force exerted onto the analyte particle; including *e.g.*, the size, geometry, configuration and operation (*e.g.*, frequency) of the electrodes, as well as the nature (*e.g.*, polarizability) of the analyte particle. Notwithstanding, it is well within the knowledge and capabilities of the skilled person-ultimately by trial-and-error-to configure and operate suitable electrodes in order to achieve a suitable effect onto an analyte particle in the reservoir.

Although this is not essential and system can function with only one capture device, the strength of the present invention especially unfolds when the system comprises a plurality of capture devices. For example, the system may comprise at least 5 capture devices, preferably at least 20, more preferably at least 50, still more preferably at least 100, yet still more preferably at least 200, most preferably at least 500; such as 1000, 2000, 5000, 10000, etc. Accordingly, when we refer herein to 'a/the capture device', 'a/the well', 'a/the first/second set of electrodes', etc. this may in embodiments refer to a plurality of-*e.g.*, each of-the capture devices, wells, first/second sets of electrodes, etc. In embodiments, the system may comprise one or more arrays of the capture devices. Indeed, the capture devices of the present invention advantageously lend themselves particularly well to being (highly) parallelized/multiplexed.

In embodiments, a plurality of the capture devices may have the same characteristics, and/or a plurality of the capture devices may have different characteristics. For example, the system may comprise one or more arrays wherein the capture devices have the same characteristics within an array and different characteristics between arrays. Herein, 'characteristics' may for example comprise the size of the well (*e.g.*, of the top opening) and the nature of the well (*e.g.*, its surfaces). The nature of the well's surfaces-and in particular the isoelectric point, which has a substantial effect on the electric double layer which is formed on said surface-can typically be controlled by surface engineering. As such, wells of different nature may comprise the surfaces of said wells being composed of different materials (*e.g.*, different dielectrics), and/or having been subjected to a different surface treatment and/or coating (cf. supra).

In preferred embodiments, the system may comprise at least captures devices having differently sized wells. Since the characteristics of the capture device play a significant role in determining which analytes can be captured by it, a system comprising captures devices with different characteristics is advantageously particularly suited for capturing different types of analytes.

In embodiments, the system may further comprise driving and/or read-out circuitry (*e.g.*, CMOS-based) for operating the electrodes.

In some preferred embodiments, the system may be a sensor probe. For example, the sensor probe may be for inserting directly into the liquid. Such a sensor probe is advantageously a convenient form for using the present system, for example for performing an action (*e.g.*, a measurement) in (bio-)reactor.

In embodiments, the reservoir may be defined by an impermeable barrier having a (semi-)permeable portion. In embodiments, the (semi-)permeable portion may be formed by a filter (*e.g.*, a (nano)porous membrane) or a microfluidic sampling system. In embodiments, the (semi-)permeable portion may comprise pores with an average width of 1000 $\mu$m or less; preferably 500 $\mu$m or less, more preferably 200 $\mu$m or less, yet more preferably 100 $\mu$m or less, still yet more preferably 50 $\mu$m or less, most preferably 20 $\mu$m or less. A (semi-)permeable portion (in an otherwise impermeable barrier) advantageously allows to (selectively; *e.g.*, based on size-exclusion and/or chemical affinity) prevent certain particles and/or chemical species from entering the reservoir, where they could interfere with the operation of the capture device. Alternatively or additionally, it can advantageously be used to dilute the liquid with a sampling buffer to achieve more favourable measurement conditions (*e.g.*, in terms of pH or conductivity).

In embodiments, any feature of any embodiment of the first aspect may independently be as correspondingly described for any embodiment of any of the other aspects.

In a second aspect, the present invention relates to a method for capturing an analyte particle from a liquid, the method comprising: (a) providing a system in accordance with any embodiment of the first aspect with the liquid in the reservoir, (b) operating at least the first set of electrodes of at least one of the capture devices so as to generate a non-uniform electric field such that there is an attractive dielectrophoretic force acting on the analyte particle.

In embodiments, the attractive dielectrophoretic force-also referred to as 'positive' dielectrophoresis-may be directed towards the first and/or second set of electrodes; preferably (at least) towards the first set of electrodes. In preferred embodiments, the non-uniform electric field may have its highest field strength at or near the first set of electrodes (*e.g.*, at the edges of the first set of electrodes). Positive dielectrophoresis is directed towards the highest field strength; so by having the highest field strength around the first set of electrodes-which are situated towards the bottom of the well-the analyte particle will advantageously experience an attractive force pulling it into the well.

In embodiments, step b may comprise applying to the first set of electrodes an alternating voltage (AC voltage), optionally combined with a direct voltage (DC voltage or bias). In embodiments wherein the capture device comprises the second set of electrodes, step b may further comprise applying to the first set of electrodes an alternating voltage, optionally combined with a direct voltage. The alternating voltage(s) may for example (independently) have a sinusoidal, trapezoidal or rectangular waveform.

In embodiments, step b may comprise modulating the operation-e.g the applied voltage, namely the AC and/or DC magnitude and AC frequency-of the at least first set of electrodes to tune the attractive dielectrophoretic force to the analyte particle. In embodiments wherein the capture device comprises the second set of electrodes, step b may preferably comprise modulating the operation of the first and second set of electrodes to tune the attractive dielectrophoretic force to the analyte particle. Along with e.g., the relative polarizability of the analyte particle and the medium, the dielectrophoretic force experienced by a particle typically at partially depends on the non-uniform electric field. This includes not only the magnitude of said force but also its direction (*e.g.*, positive/towards or negative/away from the highest field strength), and this through respectively the (local) field strength and the field frequency. As such, by controlling the voltage (*e.g.*, the AC and/or DC magnitude and AC frequency) applied to the first and/or second set of electrodes, one can not only change the strength of the attractive force experienced by an analyte particle but also *selectively-e.g.,* with respect to a further analyte or a contaminant-tune it towards said analyte particle.

In embodiments, the well may be at least partially lined with an electric double layer (EDL). The characteristics of the EDL (*e.g.*, its size) typically depend on the pH of the liquid and the nature of the underlying surface on which it is formed, particularly in terms of its isoelectric point. The isoelectric point is the pH at which the surface carries no net electrical charge, so at any other pH the surface will carry a net charge and develop an EDL (and increasingly so the further one moves away from the isoelectric point). As such, the well will most typically always be at least partially line with an EDL.

Moreover, the EDL which is formed can advantageously be influenced by adjusting the pH of the liquid. Additionally, the DC bias of the electrodes also affects the EDL, so that the EDL near the electrodes (*e.g., the* EDL on the electrode surface or on a thin covering layer; cf. supra) can also be influenced by tuning the DC bias.

In embodiments, there may be a repulsive force between the electric double layer and the analyte particle. Like the surface of the well, the analyte particle may typically have its own EDL. As the analyte particle is then attracted towards and into the well, its own EDL will interact with that of the well, creating ionic concentration differences which generate an osmotic pressure and thereby a repulsive force (which may be referred to as 'EDL force') between the analyte particle and the well. While the EDL force is typically dominant, note that even in the absence of an EDL on the analyte particle, the latter will anyway experience a repulsive force as it gets closer to the well's surface (*e.g.*, at least through a steric effect with the well's EDL or ultimately with the well's surface as such).

Thus, the systems and methods in accordance with the present invention advantageously allow to capture an analyte of interest by the interplay of (tuneable) attractive and repulsive forces. Most typically, these forces preferably include at least an attractive dielectrophoretic force and a repulsive EDL force. However, they may more generally include an interplay of any two or more of: dielectrophoretic (positive and/or negative), EDL, electrophoretic, electro-osmotic, steric, Coulomb, etc. forces.

In embodiments, capturing the analyte particle from the liquid may comprise selectively capturing the analyte particle with respect a further analyte (*e.g.*, analyte particles of another analyte species) or a contaminant. For a captured analyte particle (at rest), the attractive and repulsive forces are (overall) in balance. However, whether this balance point can be reached- and if so, where it is located-depends on the particle (*e.g.*, its polarizability, charge, EDL, etc.), and the interplay of these forces. Moreover, these forces can generally be (individually) controlled and tuned. As such, not only does it become possible to capture an analyte particle selectively (with respect a further analyte or a contaminant); the tuning of the forces also allows to specifically target a particular species of analyte particle.

In embodiments, the system may comprise at least two capture devices and step b may comprise operating the at least first set of electrodes of the at least two capture devices so as to generate two different non-uniform electric fields for capturing two dissimilar analyte particles. As noted previously, although not strictly necessary, the present invention especially excels when the system comprises a (large) plurality of capture devices. Indeed, a range of factors-both through manufacturing (*e.g.*, well size and/or surface functionalization/modification) and during operation (*e.g.*, the applied AC and/or DC voltage magnitude and AC voltage frequency, to the first and/or second electrodes individually)-can be tuned differently for different capture devices, so that these can advantageously be targeted toward different analyte particles of interest. Thus, within a single system, an arbitrarily large number of capture devices can in principle be configured for selectively capturing various analyte particles. Moreover, since at least some of these factors can be tuned in operation, the systems and methods in accordance with the present invention need not be fabricated for a specific application, but can be more universal and then finetuned to the application during used (*e.g.*, also allowing them to be reconfigured for other applications).

In embodiments, the method may further comprise: detecting whether the analyte particle is captured by the well; analysing the captured analyte particle;

and/or separating the captured analyte particle from the liquid. In some embodiments, detecting and/or analysing the analyte particle may for example comprise determining a capacitance measured between the first and/or-if present-second set of electrodes (and thus detecting whether the analyte particle is captured by the well through the measured capacitance). In alternative or complementary embodiments, it may also comprise resistive pulse sensing (cf. supra). In embodiments, separating the captured particle from the liquid may comprise capturing the particle and subsequently flushing the liquid in the reservoir (*e.g.*, before releasing the captured analyte particle back into the reservoir).

In embodiments, any feature of any embodiment of the second aspect may independently be as correspondingly described for any embodiment of any of the other aspects.

In a third aspect, the present invention relates to a use of a system in accordance with any embodiment of the first aspect for capturing an analyte particle from a liquid.

The solutions in accordance with the present invention may be particularly advantageously used in various application areas where a reliable, non-destructive method to characterize certain analytes of interest is currently lacking. For example, it may be used to measure the size and/or distribution (or dispersity)-but also other characteristics (cf. supra)-of: liposomes in liposome drug product manufacturing; viruses in virus variant detection and/or viral vector product manufacturing; vesicle and/or sub-cellular organelles in sample preparation based on cellular components; biopolymer (*e.g.*, polynucleotide or polypeptide) fragments in (cell-free) biopolymer level screening, or pre-screening prior to biopolymer sequencing; contaminant particles in chemicals used for semiconductor manufacturing; etc. Being reliable and non-destructive, the present solutions may be especially favourable in quality control in the above and other application areas.

In embodiments, any feature of any embodiment of the second aspect may independently be as correspondingly described for any embodiment of any of the other aspects.

The invention will now be described by a detailed description of several embodiments of the invention. It is clear that other embodiments of the invention can be configured according to the knowledge of the person skilled in the art without departing from the true technical teaching of the invention, the invention being limited only by the terms of the appended claims.

**Example 1:** System comprising a capture device having a closed bottom

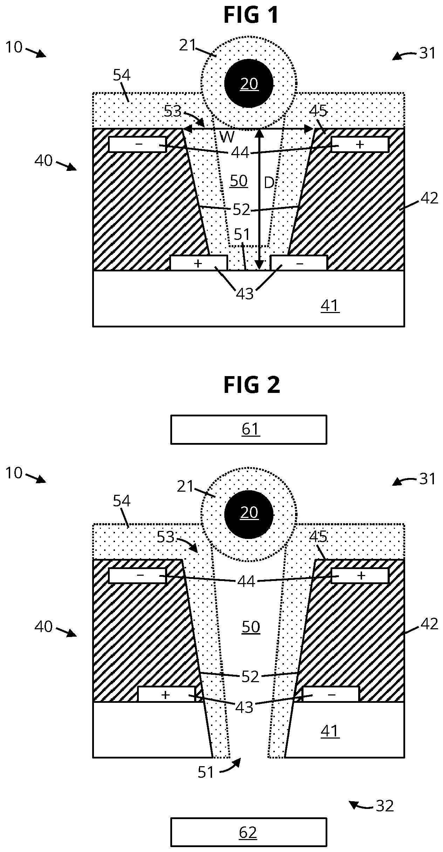

We now refer to FIG 1, illustrating a system (10) for capturing an analyte particle (20). The system (10) comprises a reservoir (31) with a liquid comprising the analyte particle (20), and a capture device (40) comprising a well (50). The capture device (40) comprises a substrate (41) (*e.g.*, a Si wafer) and a dielectric layer (42) (*e.g.*, $SiO_2$) thereon, with the well (50) being formed in the dielectric layer (42). A first set of electrodes (43) is situated in a bottom half of the well (50), namely at the bottom of the well (50) (on the substrate (41)). A second set of electrodes (44) is situated in a top half of the well (50), namely in/covered by a dielectric (e.g., $SiO_2$) cover layer (45). The well (50) is defined between a bottom (51) (which as depicted corresponds to the substrate (41)), the bottom electrodes (43), sidewalls (52) in the dielectric layer (42)/cover layer (45), and a top (53) opening up to the reservoir (31). Both the well (50) and the analyte particle (20) have an electric double layer (54, 21).

In operation, the first (43) and second (44) set of electrodes can be driven so as to generate an attractive dielectrophoretic force on the particle (20). Meanwhile, as the analyte particle (20) is pulled into the well (50), its EDL (21) and the well's EDL (54) will interact and give rise to a repulsive force. By tuning the dielectrophoretic force, a point can be reached where the attractive force(s) balance out the repulsive force(s), and thus the analyte particle (20) is effectively captured. The system (10) can be further equipped to detect and/or analyse the captured analyte particle (20), for example through performing a capacitance measurement on the well (50).

Although FIG 1 only depicts one capture device (40), it will clear that the system (10) can comprise many such capture devices in parallel; some of which may have the same characteristics, while others may have different characteristics. By providing wells with different characteristics-such as different sizes, different natures of the surface (for example different isoelectric points; *e.g.*, through a difference in post-processing) giving rise to different EDL's, etc.-and/or applying different driving profiles to their electrodes, different wells can be configured for capturing different analyte particles, so that the same system can be used to capture and detect/analyse various analyte particles in parallel.

As a demonstration (not depicted), a functional device as a above was made-including the necessary driving circuitry-comprising about 200 capture devices of varying sizes on a single substrate within an area of about 150 $\mu$m $\times$ 150 $\mu$m. The capture devices had either a cubic well ranging from (width $\times$ length $\times$ depth) 200 nm $\times$ 200 nm $\times$ 200 nm to 2 $\mu$m $\times$ 2 $\mu$m $\times$ 2 $\mu$m or a rectangular cuboid well ranging from 300 nm $\times$ 680 nm $\times$ 300 nm to 300 nm $\times$ 17 $\mu$m $\times$ 300 nm.

More specifically, the cubic wells included the following sizes: 200 nm $\times$ 200 nm $\times$ 200 nm, 225 nm $\times$ 225 nm $\times$ 225 nm, 250 nm $\times$ 250 nm $\times$ 250 nm, 275 nm $\times$ 275 nm $\times$ 275 nm, 300 nm $\times$ 300 nm $\times$ 300 nm, 320 nm $\times$ 320 nm $\times$ 320 nm, 450 nm $\times$ 450 nm $\times$ 450 nm, 600 nm $\times$ 600 nm $\times$ 600 nm, 800 nm $\times$ 800 nm $\times$ 800 nm, 1 $\mu$m $\times$ 1 $\mu$m $\times$ 1 $\mu$m, 1.25 $\mu$m $\times$ 1.25 $\mu$m $\times$ 1.25 $\mu$m, 1.5$\mu$m $\times$ 1.5$\mu$m $\times$ 1.5$\mu$m and 2$\mu$m $\times$ 2$\mu$m $\times$ 2$\mu$m.

The rectangular cuboid wells included the following sizes: 300 nm × 680 nm × 300 nm, 300 nm × 3.4 μm × 300 nm, 300 nm × 6.8 μm × 300 nm and 300 nm × 17 μm × 300 nm.

**Example 2:** System comprising a capture device having an open bottom

We now refer to FIG 2, illustrating a system (10) for capturing an analyte particle (20) comprising a capture device (40) which is generally similar to that of FIG 1 but wherein the bottom (51) of the well (50) is open. As such, the well (50) forms a through-hole (like a nanopore) connecting the upper reservoir (31) to a lower reservoir (32).

The system (10) of FIG 2 further comprises an electrode (61) in the top reservoir (31) and one (62) in the bottom reservoir (31). By applying an electric potential between these electrodes (61, 62), further effects/forces-such as electrophoretic and/or electro-osmotic forces-can be generated to act upon the analyte particle (20). Additionally, this can also enable other ways of detecting and/or analysing the analyte, such as via resistive pulse sensing.

It will be clear that a system (10) in accordance with the present invention need not exclusively comprise capture devices (40) as depicted either in FIG 1 and FIG 2, but that these-as well as still other configurations-could be readily combined and integrated into a single system (10) as desired.

**Example 3:** Experimental system for liposome characterisation

This example further details how the properties (*e.g.*, size, composition, complex permittivity, etc.) of nanoscale (bio)particles, such as liposomes, can be determined using the proposed device architecture. This determination here leverages the frequency-dependent behaviour of the dielectrophoretic force acting on a coreshell type particle within an oscillating electric field.

For a liposome with radius r suspended in a conductive medium with complex permittivity $\varepsilon_{\mathrm{m}}^{*}$ and exposed to an oscillating electric field $\overline{E}$, the time-averaged dielectrophoretic force, $\langle F_{\mathrm{DEP}} \rangle$, can be expressed-based on the Clausius-Mossoti (CM) factor-as (KIM, Daihyun, SONKER, Mukul, and ROS, Alexandra. Dielectrophoresis: From molecular to micrometer-scale analytes. Analytical chemistry, 2018, 91.1: 277-295.):

$$\langle F_{\mathrm{DEP}} \rangle = 2\pi r^{3} \Re \left\{ \frac{\varepsilon_{\mathrm{lip}}^{*} - \varepsilon_{\mathrm{m}}^{*}}{\varepsilon_{\mathrm{lip}}^{*} + 2\varepsilon_{\mathrm{m}}^{*}} \right\} \nabla |\vec{E}_{\mathrm{rms}}|^{2}$$

wherein

$$\varepsilon_{\mathrm{lip}}^{*} = \varepsilon_{\mathrm{b}}^{*} \frac{\left((r+d)/r\right)^{3} + 2\alpha}{\left((r+d)/r\right)^{3} - \alpha}$$

wherein

$$\alpha = \frac{\varepsilon_{\mathrm{i}}^{*} - \varepsilon_{\mathrm{b}}^{*}}{\varepsilon_{\mathrm{i}}^{*} + 2\varepsilon_{\mathrm{b}}^{*}}$$

wherein $\varepsilon_{\mathrm{i}}^{*}$ and $\varepsilon_{\mathrm{b}}^{*}$ are the complex permittivities of the liposome's interior compartment and its surrounding bilayer, respectively, while d is the thickness of the lipid bilayer. The dependance of the complex permittivity ($\varepsilon^{*}$) on the electric field frequency ($\omega$) can be expressed as

$$\varepsilon^{*} = \varepsilon_{0}\varepsilon' - i\frac{\sigma'}{\omega}$$

wherein $\varepsilon_{0}$ is the permittivity of free space, $\varepsilon'$ is the real part of the complex permittivity, and $\sigma'$ is the real part of the material's conductivity.

The equations above reveal that the dielectrophoretic force on a liposome is influenced by the interaction of several parameters ($r, d, \varepsilon_{i}', \varepsilon_{b}', \varepsilon_{m}', \sigma_{i}', \sigma_{s}', \sigma_{m}'$). Consequently, differences in liposome properties, such as changes in radius or interior conductivity, can lead to noticeable variations in the applied force. These variations result in distinguishable capture behaviors, including shifts in the cross-over frequency, changes in capture force intensity, or even a reversal of the force. Furthermore, if the capture behavior can be accurately measured to permit the fitting of a mathematical or computational model to the collected data, the frequency response of an unknown particle can be employed to determine its physical characteristics, such as size, permittivity, composition, and more.

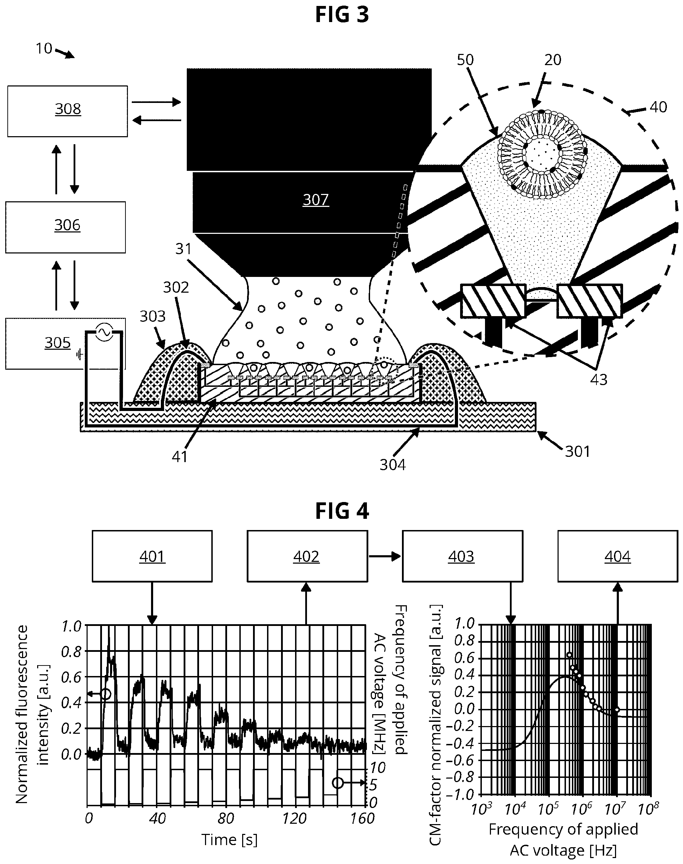

With reference to FIG 3, in a proof-of-concept experiment, a system (10) for capturing an analyte particle (20) comprised an array of capture devices (40) defined in a silicon substrate (41). Each capture device (40) featured a nanowell (50) with a diameter of 150 nm and a depth of 200 nm and equipped with a pair of (nano)electrodes (43) at the bottom of the well (50). The substrate (41) was affixed to a printed circuit board (301) through wirebonding (302). To shield the wirebonds (302) from the environment, a curable glue or epoxy, such as globtop, (303) was used. The leads of the nanowell electrodes (43) were connected by an AC signal line (304) to an AC signal voltage generator (305). The settings (*e.g.*, signal type, signal frequency and signal amplitude), and on/off state of the generator (305) were directly controlled by a computer (306). A solution, containing as analyte particles (20) fluorescently labelled liposomes with a radius of approximately 50 nm, was pipetted onto the silicon substrate (41), thereby forming a reservoir (31). The entire assembly was positioned under a high-magnification objective (307) of a highspeed laser-scanning fluorescence confocal microscope (308) to enable tracking of the particle movements and their intensity at the nanowells (50) through imaging. The confocal microscope (308) was also controlled by a computer, ideally the same computer (306) controlling the signal generator (to facilitate synchronizing imaging with the application of AC voltages).

Data collection involved continuous fluorescence imaging of the nanowell array while different AC signals were applied across the two nanoelectrodes (43). The oscillating electric field lead to a net force acting on the liposomes (20), either attracting them (positive DEP) or repelling them (negative DEP) from the nanowells (50). A stronger attractive force yielded more captured liposomes (20), resulting in a stronger fluorescence signal. For this experiment, a specific "attractive" frequency (0.4, 0.5, 0.6, 0.8, 1.0, 1.2, 1.9, 2.3, or 3.0 MHz in this example) was held for 8 seconds, followed by 8 seconds of a strong repulsive frequency (10 MHz in this example) to release the liposomes (20) from the nanowells (50).

With reference to FIG 4, the data acquired by the computer (20) was subsequently analysed. To start, the the images were processed (401) and the fluorescence intensity was baseline corrected and normalized relative to the peak intensity observed at the nanowell locations. The resulting intensities were spatially averaged across all nanowells (50). The final 4 seconds of each 8-second period were averaged again to obtain a final signal strength for that period's frequency. The resulting signal strength vs. frequency data can be extracted (402) and be employed to fit a mathematical model (403), like the one described earlier, to determine the properties (404), such as the radius, of the captured liposomes (20). From the graph depicted in FIG 4, a liposome radius of $55 \pm 12$ nm was for instance obtained, which closely matches that of the expected radius of 50 nm.

Example values of the parameters used for fitting the liposome radius were provided in the table below:

| Parameter | Value | Fixed |
|---|---|---|
| $r$ [nm] | $55 \pm 12$ | N |
| $d$ [nm] | 2 | Y |
| $\varepsilon_i{'}$ [1] | 78 | Y |
| $\varepsilon_b{'}$ [1] | 10 | Y |

| Parameter | Value | Fixed |
|---|---|---|
| $\varepsilon_m{'}$ [1] | 78 | Y |
| $\sigma_i{'}$ [S/m] | $2 \times 10^{-3}$ | Y |
| $\sigma_s{'}$ [S/m] | $1 \times 10^{-7}$ | Y |
| $\sigma_m{'}$ [S/m] | $2 \times 10^{-4}$ | Y |

**Example 4:** Sensor probe for use in a (bio)reactor vessel

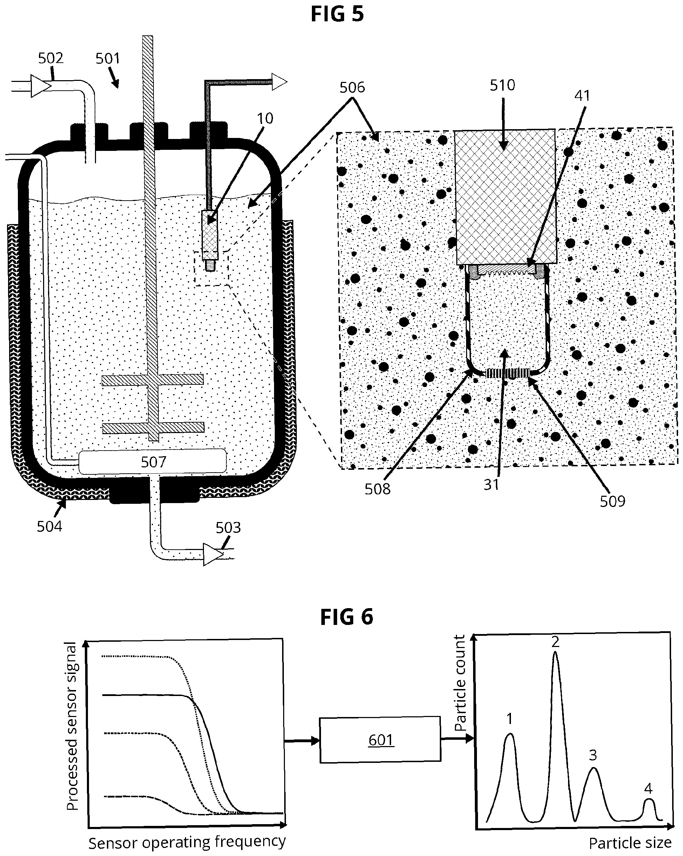

We now refer to FIG 5, showing a (bio)reactor vessel (501) as known in the art. Such vessel (401) may for example comprise inlet (502) and outlet (503) channels for fluids and gases, which are typically connected by sterile tubing and controlled by pumps. It may further include measures for regulating temperature-such as a thermal insulation jacket (504) with built-in heaters-, for controlled agitation-typically employing motorized rudders (505)-, and to monitor critical conditions within the (bio)reactor fluid (506)-such as pH, temperature, dissolved $O_2$, $CO_2$, and more. These conditions are typically monitored using sensor probes inserted into the (bio)reactor fluid (506). Also depicted in FIG 5 is a gas bubbler, which can be used for agitation as well and/or for controlling the gases dissolved in the (bio)reactor fluid (506).

One embodiment of a system (10) in accordance with the present invention aims to facilitate the in-situ measurement of (bio)particle distribution, including parameters like size and dielectric properties, without the need for explicit sampling. To achieve this, a sensor probe (10) was designed, comprising a silicon substrate (41) featuring various arrays of nanowells or nanopores (50) with distinct configurations, such as different well/pore sizes, depths, electrode positions, and so on. These configurations were ideally customized to optimize the detection of the (bio)reactor's specific analytes of interest (20), such as liposomes or viral vectors.

The sampling reservoir (31) of the sensor probe (10) was enclosed and separated from the bulk (bio)reactor fluid by an impermeable barrier (508). However, the sampling reservoir (508) also has (semi-)permeable portion (509), which could be a relatively simple filter frit (e.g., a nanoporous membrane) or a more complex microfluidic sampling system that allows the controlled passage of substances. This (semi-)permeable portion (509) may serve to block particles (e.g., cells or large cellular debris) or specific chemical substances (e.g., certain ions)-which could interfere with the functioning of the capture devices-from reaching the surface of the substrate (41). Alternatively or additionally, it can be employed to dilute the (bio)reactor fluid with a sampling buffer to achieve more stable measurement conditions, for instance, in terms of pH or medium conductivity.

The substrate (41) and sampling reservoir (508) were mounted on a sensor probe head (510), which houses the necessary electronics for reading the sensor signals and transmitting the data to an analysis and control system (e.g., cf. Example 3).

The signal data collected from the various sensor configurations was subsequently processed and used to fit a mathematical or numerical particle model, similar to the one described earlier (see Example 3). This process provides insights into the distribution of particles within the (bio)reactor fluid (506), offering information on the types and quantities of particles present. This is also schematically illustrated in FIG 6, showing on the left side processed sensor signals in function of sensor operating frequency, which can-after fitting a mathematical or numerical particle model (601)-be turned into particle size distribution, *e.g.,* revealing different particles (1, 2, 3 and 4) present in the (bio)reactor fluid (506).

Since the proposed sensing and analysis method can be performed rapidly (in seconds to minutes, depending on the required accuracy) and at-line and/or in-line, it can be used not only for monitoring the production process but can also be integrated into the process control feedback-loop. This means it can contribute to adjusting the supply or removal of reagents, regulating the degree of agitation, and other control measures.

Additionally, this approach can be combined with other particle distribution measurement techniques, such as dynamic light scattering (DLS) or resistive pulse sensing, to provide complementary or confirming data. This enhances the robustness of the analysis pipeline and further refines the resulting particle distribution data.

It is to be understood that although preferred embodiments, specific constructions, configurations and materials have been discussed herein in order to illustrate the present invention. It will be apparent to those skilled in the art that various changes or modifications in form and detail may be made without departing from the scope of the invention as defined in the appended claims.

**Claims**

1. A system (10) for capturing an analyte particle (20) from a liquid, comprising:

    i. a reservoir (31) for holding the liquid; and
    ii. one or more capture devices (40), each comprising:

    - a well (50) having a top (53) opening up to the reservoir (31), a bottom (51), and a depth (D) extending from the top (53) to the bottom (51), and
    - a first set of electrodes (43) at least 50% of the well's depth (D) below the top opening (53), preferably at least 65%, more preferably at least 75%, for generating an electric field.

2. The system (10) according to claim 1, wherein the top opening (53) has a width (W) of from 10 nm and 10 μm, preferably from 100 nm to 1 μm.

3. The system (10) according to any of the previous claims, wherein the analyte particle (20) has a size in the range of 0.5 nm to 5 μm, preferably 1 nm to 1 μm.

4. The system (10) according to any of the previous claims, comprising one or more arrays of the capture devices (40).

5. The system (10) according to any of the previous claims, being a sensor probe and wherein the reservoir (31) is defined by an impermeable barrier (508) having a semipermeable portion (509)..

6. The system (10) according to any of the previous claims, wherein the well (50) is at least partially delineated by a surface (52) comprising a dielectric material.

7. The system (10) according to any of the previous claims, wherein a surface of the well (50) is modified so as to control an electric double layer (54) formed thereon.

8. The system (10) according to any of the previous claims, wherein the capture device (40) comprises a second set of electrodes (44) at most 50% of the well's depth (D) below the top opening (53), preferably at most 35%, more preferably at most 25%.

9. A method for capturing an analyte particle (20) from a liquid, the method comprising:

    a. providing a system (10) as defined in any of the previous claims with the liquid in the reservoir (31),
    b. operating at least the first set of electrodes (43) of at least one of the capture devices (40) so as to generate a non-uniform electric field such that there is an attractive dielectrophoretic force acting on the analyte particle (20).

10. The method according to claim 9, wherein step b comprises applying to the first set of electrodes (43) an alternating voltage, optionally combined with a direct voltage.

11. The method according to any of claims 9 to 10, wherein the well (50) is at least partially lined with an electric double layer (54) and wherein there is a repulsive force between the electric double layer (54) and the analyte particle (20).

12. The method according to any of claims 9 to 11, capturing the analyte particle (20) from the liquid comprises selectively capturing the analyte particle (20) with respect a further analyte or a contaminant.

13. The method according to any of claims 9 to 12, wherein the system (10) comprises at least two capture devices (40) and wherein step b comprises operating the at least first set of electrodes (43) of the at least two capture devices (40) so as to generate two different non-uniform electric fields for capturing two dissimilar analyte particles (20).

**14.** The method according to any of claims 9 to 13, wherein step b comprises modulating the operation of the at least first set of electrodes (43) to tune the attractive dielectrophoretic force to the analyte particle (20).

**15.** The method according to any of claims 9 to 15, further comprising:

> - detecting whether the analyte particle (20) is captured by the well (50);
> - analysing the captured analyte particle (20); and/or
> - separating the captured analyte particle (20) from the liquid.

## FIG 1

## FIG 2

## FIG 3

## FIG 4

**FIG 5**

**FIG 6**

Europäisches
Patentamt

European
Patent Office

Office européen
des brevets

**EUROPEAN SEARCH REPORT**

Application Number

EP 23 21 9565

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/285579 A1 (IIZUKA KUNIHIKO [JP] ET AL) 19 September 2019 (2019-09-19) * paragraphs [0065] – [0069], [0131], [0132], [0144], [0173], [0180], [0194]; figures 3-4 * | 1-15 | INV. B01L3/00 B01D61/42 G01N27/26 |
| X | US 2008/302732 A1 (SOH HYONGSOK [US] ET AL) 11 December 2008 (2008-12-11) * paragraphs [0075], [0076], [0100], [0102], [0103], [0145], [0146]; figure 8A * | 1-15 | |
| X | US 2020/283722 A1 (KOMORI TAKAYUKI [JP] ET AL) 10 September 2020 (2020-09-10) * paragraphs [0076] – [0078], [0111], [0114], [0148], [0155], [0161]; figures Fig. 8-9 * | 1-15 | |
| A | US 2021/260602 A1 (KADIC SAMIR [DE] ET AL) 26 August 2021 (2021-08-26) * the whole document * | 1-15 | TECHNICAL FIELDS SEARCHED (IPC) B01L |

The present search report has been drawn up for all claims

| Place of search | Date of completion of the search | Examiner |
|---|---|---|
| The Hague | 14 March 2024 | Vahidpour, Farnoosh |

EPO FORM 1503 03.82 (P04C01)

## ANNEX TO THE EUROPEAN SEARCH REPORT
## ON EUROPEAN PATENT APPLICATION NO.

EP 23 21 9565

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2024

| Patent document cited in search report | | | Publication date | Patent family member(s) | | | Publication date |
|---|---|---|---|---|---|---|---|
| US 2019285579 | A1 | | 19-09-2019 | JP | 6671665 | B2 | 25-03-2020 |
| | | | | JP | WO2018078999 | A1 | 12-09-2019 |
| | | | | US | 2019285579 | A1 | 19-09-2019 |
| | | | | WO | 2018078999 | A1 | 03-05-2018 |
| US 2008302732 | A1 | | 11-12-2008 | AT | E554859 | T1 | 15-05-2012 |
| | | | | EP | 2150350 | A1 | 10-02-2010 |
| | | | | US | 2008302732 | A1 | 11-12-2008 |
| | | | | WO | 2008147530 | A1 | 04-12-2008 |
| US 2020283722 | A1 | | 10-09-2020 | CN | 111212900 | A | 29-05-2020 |
| | | | | EP | 3693453 | A1 | 12-08-2020 |
| | | | | JP | 6620269 | B2 | 11-12-2019 |
| | | | | JP | WO2019069900 | A1 | 14-11-2019 |
| | | | | US | 2020283722 | A1 | 10-09-2020 |
| | | | | WO | 2019069900 | A1 | 11-04-2019 |
| US 2021260602 | A1 | | 26-08-2021 | CN | 112334234 | A | 05-02-2021 |
| | | | | DE | 102018211001 | A1 | 09-01-2020 |
| | | | | EP | 3817859 | A1 | 12-05-2021 |
| | | | | US | 2021260602 | A1 | 26-08-2021 |
| | | | | WO | 2020007703 | A1 | 09-01-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LU, HENGYUN ; GIORDANO, FRANCESCA ; NING, ZEMIN.** Oxford Nanopore MinION sequencing and genome assembly. *Genomics, proteomics & bioinformatics,* 2016, vol. 14 (5), 265-279
- **CLELAND, ANDREW N. et al.** Nanopore Characterization. *Drug Development & Delivery,* 2016, vol. 16 (3), 20-26

- **KIM, DAIHYUN ; SONKER, MUKUL ; ROS, ALEXANDRA.** Dielectrophoresis: From molecular to micrometer-scale analytes. *Analytical chemistry,* 2018, vol. 91 (1), 277-295